Europäisches Patentamt

European Patent Office

Office européen des brevets

(19)

(11) **EP 0 935 304 B1**

(12) **EUROPEAN PATENT SPECIFICATION**

(45) Date of publication and mention
of the grant of the patent:
**02.05.2001 Bulletin 2001/18**

(51) Int Cl.$^7$: **H01M 8/10**, C25B 9/00

(21) Application number: **99102246.8**

(22) Date of filing: **04.02.1999**

(54) **Polymer electrolyte fuel cell and preparation method for polymer electrolyte fuel cell**

Polymerelektrolyt-Brennstoffzelle und Herstellungsverfahren

Pile à combustible à électrolyte polymère et procédé de préparation

(84) Designated Contracting States:
**DE FR GB**

(30) Priority: **06.02.1998 JP 2574498**

(43) Date of publication of application:
**11.08.1999 Bulletin 1999/32**

(73) Proprietor: **MATSUSHITA ELECTRIC INDUSTRIAL CO., LTD.**
**Kadoma-shi, Osaka (JP)**

(72) Inventors:
• **Sugawara, Yasushi**
**Neyagawa-shi (JP)**
• **Uchida, Makoto**
**Hirakata-shi (JP)**
• **Ohara, Hideo**
**Kadoma-shi (JP)**
• **Fukuoka, Yuko**
**Fushimi-ku, Kyoto-shi (JP)**
• **Eda, Nobuo**
**Hirakata-shi (JP)**

(74) Representative: **Patentanwälte**
**Leinweber & Zimmermann**
**Rosental 7,**
**II Aufgang**
**80331 München (DE)**

(56) References cited:
**EP-A- 0 700 108**       DE-A- 19 544 323
**US-A- 5 399 184**

## Description

## BACKGROUND OF THE INVENTION

### 1. Field of the Invention

The present invention relates to a preparation method for a polymer electrolyte fuel cell (hereinafter referred to as PEFC) which uses as a fuel such a reducing agent as pure hydrogen or reform hydrogen obtained from methanol or a fossil fuel and uses air, oxygen or the like as an oxidizing agent.

### 2. Description of Related Art

A PEFC is of a structure which comprises as the hydrogen electrode and the oxygen electrode a membrane electrode assembly (hereinafter referred to as MEA) comprising a polymer electrolyte membrane, which is an electrolyte, and a gas diffusion electrode bonded to each other, and additionally means for supplying such a reducing agent as pure hydrogen or reform hydrogen as a fuel and supplying air, oxygen or the like as an oxidizing agent.

In a PEFC, reactions represented by the formula (1) and the formula (2) take place respectively at the negative electrode and the positive electrode.

$$H_2 \rightarrow 2H^+ + 2e^- \qquad (1)$$

$$1/2O_2 + 2H^+ + 2e^- \rightarrow H_2O \qquad (2)$$

Protons generated at the negative electrode move to the positive electrode via the polymer electrolyte membrane. When the bonding of the polymer electrolyte membrane and the gas diffusion electrode to each other is insufficient, the movement of protons proceeds with difficulty at the interface of the electrode and the polymer electrolyte membrane, and resultantly the internal resistance of the cell increases.

At the bonding interface of the polymer electrolyte and the electrode, there is formed a three phase (namely, pores which are paths for supplying reaction gases, polymer electrolyte and electrode) interface where a catalytic reaction takes place. The area of the three phase interface is governed by the state of bonding of the polymer electrolyte membrane and the gas diffusion electrode to each other. Therefore, the state of bonding of the polymer electrolyte membrane and the gas diffusion electrode in an MEA greatly influences on the characteristic property of a PEFC.

A prior preparation method for an MEA is disclosed, for example, in JP-A-6-203849, JP-A-8-88011 or JP-A-8-106915, which comprises putting a polymer electrolyte membrane between gas diffusion electrodes and subjecting the resulting system to hot pressing at a pressure predetermined within the range of 25-200 kgf/cm² and at a temperature predetermined within the range of 120-200°C, to bond the polymer electrolyte membrane and the gas diffusion electrodes.

## BRIEF SUMMARY OF THE INVENTION

In the MEA prepared by the prior methods, however, bonding of the polymer electrolyte membrane and the catalyst layer of the gas diffusion electrode at their interface is insufficient and moreover the three phase interface does not assume a three-dimensional structure sufficiently. In the prior cells, therefore, the internal resistance is high, the utilization ratio of the catalyst is low, and a satisfactory cell output characteristic is not obtained.

The object of the present invention is to provide a method of bonding a polymer electrolyte membrane and a gas diffusion electrode to each other which can improve the state of bonding between the polymer electrolyte membrane and the gas diffusion electrode to decrease the internal resistance and, at the same time, to make the three phase interface assume a three-dimensional structure thereby to increase the reaction area, and can resultantly materialize a higher output PEFC, and to provide a fuel cell obtained by using the method.

To attain the above-mentioned object, the present invention provides a preparation method for a polymer electrolyte fuel cell which comprises, in the step of bonding gas diffusion electrodes to the both sides of a polymer electrolyte membrane by means of hot pressing, the step of bringing the polymer electrolyte membrane and the gas diffusion electrodes to a bonding temperature while applying a pressure to the membrane and electrodes, and the step of applying thereto a bonding pressure not lower than the pressure applied in the preceding step after the bonding temperature has been reached.

The present invention also provides a polymer electrolyte fuel cell which uses a membrane electrode assembly, comprising a polymer electrolyte membrane and gas diffusion electrodes, prepared by the above-mentioned method.

According to the present invention, the state of bonding of the polymer electrolyte membrane and the gas diffusion electrode to each other is improved, whereby an MEA can be obtained wherein the internal resistance is decreased and the three phase interface is made to assume a three-dimensional structure to increase the reaction area, and a PEFC with a higher output can be materialized.

## BRIEF DESCRIPTION OF THE SEVERAL VIEW OF THE DRAWINGS

Fig. 1 is a graph showing the relation between the pressing pressure and the internal resistance.

Fig. 2 is a graph showing the relation between the pressing pressure and the current density in the activation polarization region.

Fig. 3 is a graph showing the current density-voltage curve.

DETAILED DESCRIPTION OF THE INVENTION

The aspect of the present invention described in Claim 1 relates to a method of bonding a polymer electrolyte membrane and a gas diffusion electrode to each other which comprises, in the step of bonding the gas diffusion electrode to the both sides of the polymer electrolyte membrane by means of hot pressing, (1) the step of bringing the polymer electrolyte membrane and the gas diffusion electrodes to a bonding temperature while applying a pressure to the membrane and electrodes and (2) the step of applying thereto a bonding pressure not lower than the pressure applied in the preceding step (1) after the bonding temperature has been reached. According to the above-mentioned method of bonding, an MEA which has a low internal resistance and a large reaction area can be obtained.

In the present invention, the terms "bonding pressure" and "bonding temperature" respectively refer to the pressure and temperature required at the time of bonding electrodes to the both sides of a polymer electrolyte membrane by means of hot pressing. These pressure and temperature may somewhat vary depending on the shape and kind of the polymer electrolyte and the bonding time and so on, but they can be easily determined experimentally by those skilled in the art.

The above-mentioned pressure not higher than the bonding pressure in the step (1) (hereinafter referred to pressure a) is preferably 5-75 kgf/cm$^2$ 1 Kgf/cm$^2$ = 98.1 kPa, more preferably 20-75 kgf/cm$^2$. After the bonding temperature has been reached, the above-mentioned pressure a may be immediately increased to proceed to the step (2) or alternatively the pressure a may be maintained for some time and then increased to proceed to the step (2). However, the sum of the pressure application time is preferably controlled to amount to 1-20 minutes, more preferably 5-10 minutes. The pressure a may vary somewhat within the range of 5-75 kgf/cm$^2$ so long as it is not higher than the bonding pressure; for example, the pressure may be gradually increased to approach the pressure of the step (2).

The bonding pressure b at the above-mentioned step (2) is not particularly restricted so long as it is higher than the pressure a, but it is preferably 20-150 kgf/cm$^2$, more preferably 20-100 kgf/cm$^2$. Like in the case of pressure a, the pressure may somewhat vary in the above-mentioned range. The pressure application time is preferably 1-20 minutes, more preferably 1-10 minutes.

The aspect of the present invention described in Claim 3 relates to a PEFC which uses the MEA prepared according to the method of Claim 1 or Claim 2; since the MEA has a low internal resistance and large reaction area, a high output PEFC can be obtained.

The reason for the low internal resistance can be considered as follows. The thickness of an MEA undergoes no change by the pressing pressure (pressure a) in the temperature increasing period; if the pressure applied in the temperature increasing period is not lower than 5 kgf/cm$^2$, the polymer electrolyte in the polymer electrolyte membrane and the electrode catalyst layer and the polymer electrolyte in the electrode catalyst layer approach each other, causing entanglement of molecular chains with each other due to molecular motion to take place more easily. Consequently the state of bonding of the polymer electrolyte in the polymer electrolyte membrane and the electrode catalyst layer and the polymer electrolyte in the electrode catalyst layer to each other is improved, resulting in improved proton conductivity and low internal resistance.

On the other hand, the reaction area increases with the increase of the pressure applied in the temperature increasing period, and the current density in the activation polarization region is proportional to the reaction area of the platinum catalyst of the MEA. This is conceivably because, by the pressure application in the temperature increasing period, the contraction of the polymer electrolyte particles in the catalyst layer caused by evaporation of solvent and water was suppressed and resultantly the contact area of the particles with platinum increased.

However, when the pressing pressure is too high, as high as 75 kgf/cm$^2$ or more, the gas channels in the electrode catalyst layer and carbon paper are collapsed and the gas diffusion is hindered.

From the foregoing, for preparing an MEA having a low internal resistance and large reaction area, the pressure applied in the temperature increasing period should be not higher than the bonding pressure and preferably in the above-mentioned range.

Some preferred embodiments of the present invention are described below.

Embodiment 1

Carbon powder carrying a platinum catalyst is mixed with N-butyl acetate to obtain a liquid dispersion of the platinum catalyst. While the liquid dispersion is being stirred with a magnetic stirrer an alcohol solution of a polymer electrolyte is added in drops thereto, and then the resulting mixture is made into the form of paste by using an ultrasonic dispersing machine. The paste is coated on one side of a carbon paper to which tetrafluoroethylene-hexafluoropropylene copolymer (hereinafter referred to as FEP) has been melt-bonded beforehand, and then dried to obtain a gas diffusion electrode. A polymer electrolyte membrane is put between two electrodes prepared as described above, and the resulting system is pressed by using a hot press at 5-75 kgf/cm$^2$ until the temperature reaches 120-170°C, and then bonded by a hot press at 20-150 kgf/cm$^2$. The MEA obtained through the above-mentioned steps has a low internal resistance and large reaction area, and hence can give a higher output PEFC.

EXAMPLES

The present invention is described below with reference to Examples.

Example 1

A carbon powder carrying 10-30% by weight of a platinum catalyst was mixed with N-butyl acetate to give a weight ratio of platinum to N-butyl acetate of 1 to 120, to obtain a liquid dispersion of the platinum catalyst. While the liquid dispersion was being stirred with a magnetic stirrer, an alcohol solution of a polymer electrolyte was added in drops thereto until the ratio of amount of the platinum to the polymer electrolyte reached 1 : 2. Then the resulting mixture was made into the form of paste by using an ultrasonic dispersing machine. The alcohol solution of polymer electrolyte used was "5% NAFION solution" (a trade name, mfd. by Aldrich Chemical Co., Ltd., USA). The paste was coated on one side of a carbon paper (mfd. by Toray K.K.) to which 20-60% by weight of FEP had been melt-bonded beforehand, and then dried to obtain a gas diffusion electrode. A perfluorocarbonsulfonic acid membrane, as a polymer electrolyte membrane, was put between two electrodes prepared as described above, and the resulting system was brought up to 150°C at a temperature increasing rate of 20°C/min while being pressed at 5 kgf/cm$^2$ by use of a hot press. The pressure application time at 5 kgf/cm$^2$ was 6.5 minutes. After brought to 150°C, the system was hot-pressed at 50 kgf/cm$^2$ for 5 minutes. The polymer electrolyte membrane used was NAFION 112 (a trade name, mfd. by Du Pont as Nemours, E.I. Co., USA). A PEFC was prepared by using the MEA thus obtained and was designated as cell A.

Example 2

A cell B was prepared in the same manner as in Example 1 except for changing the pressure applied in the temperature increasing period to 20 kgf/cm$^2$.

Example 3

A cell C was prepared in the same manner as in Example 1 except for changing the pressure applied in the temperature increasing period to 50 kgf/cm$^2$.

Example 4

A cell D was prepared in the same manner as in Example 1 except for changing the pressure applied in the temperature increasing period to 75 kgf/cm$^2$ and

the pressure applied after completion of temperature increase to 100 kgf/cm$^2$.

Comparative Example 1

A cell E was prepared in the same manner as in Example 1 except for changing the pressure applied in the temperature increasing period to 0 kgf/cm$^2$.

Comparative Example 2

A cell F was prepared in the same manner as in Example 4 except for changing the pressure applied in the temperature increasing period to 0 kgf/cm$^2$.

Comparative Example 3

A cell G was prepared in the same manner as in Example 4 except for changing the pressure applied in the temperature increasing period to 100 kgf/cm$^2$.

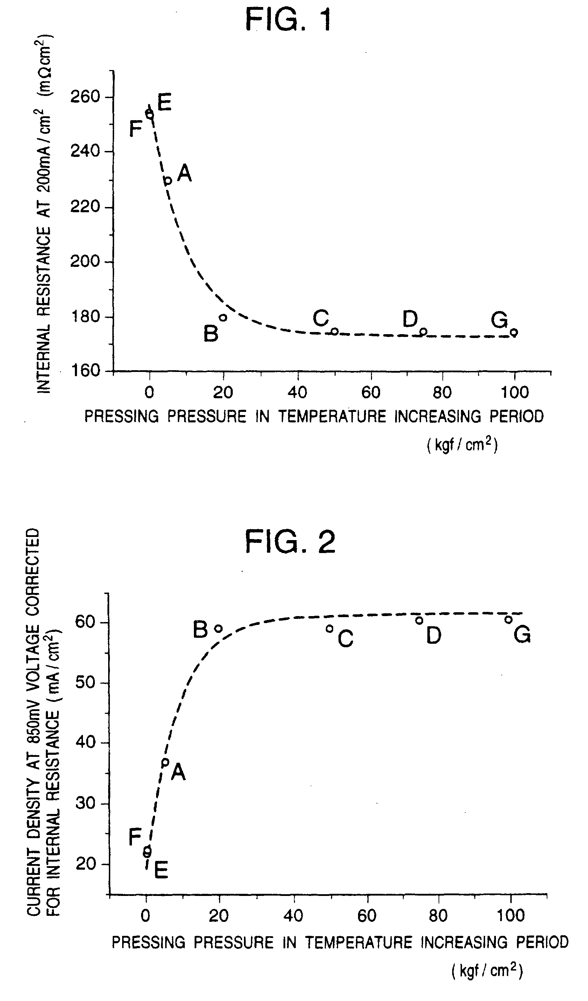

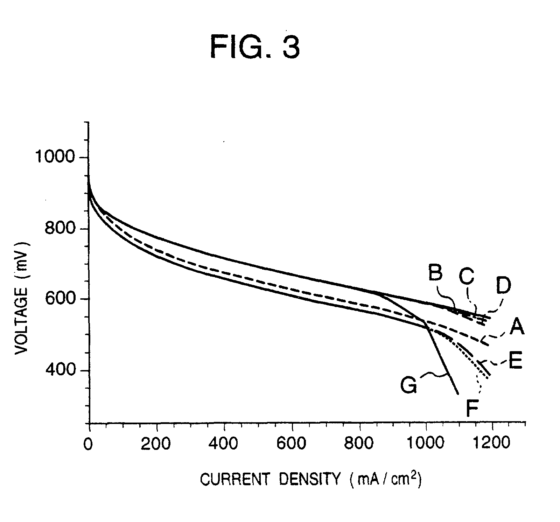

The cells A, B, C, D, E, F and G prepared above were operated by using warmed and humidified hydrogen (normal pressure) and oxygen (normal pressure) to examine their characteristic properties. A curve showing the pressure applied in the temperature increasing period vs. the internal resistance is shown in Fig. 1, a curve showing the pressure applied in the temperature increasing period vs. the current density in the activation polarization region in Fig. 2, and a curve of the current vs. the voltage in Fig. 3.

Fig. 1 is a plot of the internal resistance at 200 mA/cm$^2$ vs. the pressure applied in the temperature increasing period. Fig. 1 reveals that the internal resistance decreases as the pressure applied in the temperature increasing period increases. Besides, no change was observed in the thickness of the MEA irrespective of the pressure applied in the temperature increasing period. Therefore, it is considered that in the cells A, B, C, D and G, wherein the pressure applied in the temperature increasing period was 5 kgf/cm$^2$ or more, the polymer electrolyte in the polymer electrolyte membrane and the electrode catalyst layer and the polymer electrolyte in the electrode catalyst layer approached each other, causing entanglement of molecular chains with each other due to molecular motion to take place more easily; consequently the state of bonding of the polymer electrolyte in the polymer electrolyte membrane and the electrode catalyst layer and the polymer electrolyte in the catalyst layer to each other was improved, leading to improved proton conductivity and resultant low internal resistance.

Fig. 2 is a plot of the current density in the activation polarization region at a cell voltage, corrected for internal resistance, of 850 mV vs. the pressure applied in the temperature increasing period. The current density in the activation polarization region is proportional to the reaction area of the platinum catalyst of MEA. Therefore, the result shown in Fig. 2 reveals that the reaction area increase as the pressure applied in the temperature increasing period increases, the area obtained at pressures of 20 kgf/cm$^2$ or more being 2.68 times that at 0 kgf/cm$^2$. Since the platinum catalyst used was the same and the amount of platinum was also the same, the above-mentioned result shows that the reaction area increased as the pressure applied in the temperature increasing period increased. This is conceivably because the application of pressure in the temperature increasing period suppressed the contraction of the polymer electolyte particles in the catalyst layer caused by evaporation of solvent and water, and resultantly the contact area of the particles with platinum increased.

From the above-mentioned results shown by Figs. 1 and 2, it is revealed that MEAs having a low internal resistance and a large reaction area can be obtained when the pressure applied in the temperature increasing period is 5 kgf/cm$^2$ or more. From the result of Fig. 3 showing voltage vs. current density, it is observed that the cell G prepared at a pressure, applied in the temperature increasing period, of 100 kgf/cm$^2$ has a poor characteristic property in the high current density region. This is conceivably because the too high pressure causes the gas channels in the electrode catalyst layer and the carbon paper to collapse and resultantly hinders gas diffusion.

From the results described above, it is observed that, for preparing MEAs having a low internal resistance and a high reactivity, a good effect is obtained when the pressure applied in the temperature increasing period is not lower than 5 kgf/cm$^2$ and not higher than 75 kgf/cm$^2$ and the effect is particularly distinctive when the pressure is 20-75 kgf/cm$^2$.

Though the present invention was explained with platinum catalyst in the above Examples, the invention can be applied to noble metal catalysts in general, such as palladium or iridium catalyst.

Though, in the above Examples, gas diffusion electrodes were obtained by preparing a paste comprising a platinum catalyst, polymer electrolyte and organic solvent, and then coating the paste on a water repellent-treated carbon paper, followed by drying, the present invention can be applied to gas diffusion electrodes in general which comprise noble metal catalysts and polymer electrolytes without being limited to the preparation method used in the above Examples.

Further, though the present invention was explained in the above Examples with perfluorocarbonsulfonic acid resin as the polymer electrolyte, the present invention can be applied to cation exchange resins in general, including perfluorocarboncarboxylic acid resin, styrene-divinylbenzenesulfonic acid resin and styrene-butadienesulfonic acid resin.

As set forth above, according to the present invention, MEAs wherein the state of bonding of the polymer electrolyte membrane and the gas diffusion electrode to each other is improved and thereby the internal resistance is reduced and the reaction area is enlarged can be obtained and PEFCs with higher output can be materialized.

**Claims**

1. A preparation method for a polymer electrolyte fuel cell which uses an assembly comprising a polymer electrolyte membrane and gas diffusion electrodes bonded to both sides of the membrane, which method comprises the step of bringing the polymer electrolyte membrane and the gas diffusion electrodes to a bonding temperature while applying thereto a pressure and the step of applying thereto a bonding pressure not lower than the pressure applied in the preceding step after the bonding temperature has been reached.

2. The preparation method for a polymer electrolyte fuel cell according to Claim 1 wherein the pressure applied in the preceding step is 0.49-7.4 MPa (5-75 kgf/cm$^2$).

3. A polymer electrolyte fuel cell which comprises a hydrogen and an oxygen electrodes consisting essentially of a membrane electrode assembly comprising a polymer electrolyte membrane and gas diffusion electrodes bonded to both sides of the membrane, and means for supplying a reducing agent and an oxidizing agent, wherein the assembly comprising the polymer electrolyte membrane and the gas diffusion electrodes prepared by the method according to Claim 1 or 2.

**Patentansprüche**

1. Herstellungsverfahren für eine Polymerelektrolyt-Brennstoffzelle, die eine Anordnung verwendet, welche eine Polymerelektrolytmembran und Gasdiffusionselektroden enthält, die mit beiden Seiten der Membran verbunden sind, welches Verfahren einen Schritt enthält, in dem die Polmerelektrolytmembran und die Gasdiffusionselektroden auf eine Verbindungstemperatur gebracht werden, während Druck auf sie ausgeübt wird, und einen Schritt, in dem auf sie ein Verbindungsdruck, der nicht geringer ist als der Druck, der in dem vorangehenden Schritt ausgeübt wurde, ausgeübt wird, nachdem die Verbindungstemperatur erreicht wurde.

2. Herstellungsverfahren für eine Polymerelektrolyt-Brennstoffzelle nach Anspruch 1, bei welchem der in dem vorangehenden Schritt ausgeübte Druck 0,49 - 7,4 MPa (5 - 75 kgf/cm$^2$) ist.

3. Polymerelektrolyt-Brennstoffzelle, die eine Wasserstoff- und eine Sauerstoffelektrode, die im wesentlichen aus einer Membran-Elektrodenanordnung bestehen, die eine Polymerelektrolytmembran und mit beiden Seiten der Membran verbundene Gasdiffusionselektroden enthält, sowie eine Einrichtung zur Zufuhr eines Reduktionsmittels und eines Oxidationsmittels enthält, wobei die Anordnung die Polymerelektrolytmembran und die Gasdiffusionselektroden enthält, die mit dem Verfahren nach Anspruch 1 oder 2 hergestellt wurden.

## Revendications

1. Procédé de préparation d'une pile à combustible à électrolyte de polymère qui utilise un ensemble comprenant une membrane d'électrolyte de polymère et des électrodes de diffusion des gaz liées aux deux côtés de la membrane, lequel procédé comprend l'étape consistant à amener la membrane d'électrolyte de polymère et les électrodes de diffusion des gaz à une température de liaison tout en appliquant à celles-ci une pression et l'étape consistant à appliquer à celles-ci une pression de liaison qui n'est pas inférieure à la pression appliquée au cours de l'étape précédente après que la température de liaison a été atteinte.

2. Procédé de préparation d'une pile à combustible à électrolyte de polymère selon la revendication 1, dans lequel la pression appliquée au cours de l'étape précédente est de 0,49 à 7,4 MPa (5 à 75 kgf/cm$^2$).

3. Pile à combustible à électrolyte de polymère qui comprend une électrode d'hydrogène et une électrode d'oxygène constituées essentiellement d'un ensemble d'électrode à membrane comprenant une membrane d'électrolyte de polymère et des électrodes de diffusion des gaz liées aux deux côtés de la membrane et un moyen destiné à fournir un agent réducteur et un agent oxydant, dans laquelle l'ensemble comprenant la membrane d'électrolyte de polymère et les électrodes de diffusion des gaz, est préparé par le procédé conforme à la revendication 1 ou 2.

# FIG. 1

Y-axis: INTERNAL RESISTANCE AT 200mA / cm² $(m\Omega cm^2)$

X-axis: PRESSING PRESSURE IN TEMPERATURE INCREASING PERIOD $(kgf / cm^2)$

# FIG. 2

Y-axis: CURRENT DENSITY AT 850mV VOLTAGE CORRECTED FOR INTERNAL RESISTANCE $(mA / cm^2)$

X-axis: PRESSING PRESSURE IN TEMPERATURE INCREASING PERIOD $(kgf / cm^2)$

# FIG. 3